(19) Europäisches Patentamt

European Patent Office

Office européen des brevets

(11) EP 0 970 927 A2

(12) EUROPEAN PATENT APPLICATION

(43) Date of publication:
12.01.2000 Bulletin 2000/02

(51) Int. Cl.⁷: $C03B\ 37/05$, $C03C\ 13/06$

(21) Application number: 99113346.3

(22) Date of filing: 09.07.1999

(84) Designated Contracting States:
AT BE CH CY DE DK ES FI FR GB GR IE IT LI LU
MC NL PT SE
Designated Extension States:
AL LT LV MK RO SI

(30) Priority: 10.07.1998 US 113457

(71) Applicant:
Armstrong World Industries, Inc.
Lancaster Pennsylvania 17603 (US)

(72) Inventor: Kent, Albert H.
Lancaster, PA 17603 (US)

(74) Representative:
Finck, Dieter, Dr.Ing. et al
v. Füner Ebbinghaus Finck Hano
Mariahilfplatz 2 - 3
81541 München (DE)

(54) **Fiberized mineral wool and method for making same**

(57) A method for fiberizing molten mineral material. The method comprises the steps of melting rock to form a molten slag, causing the slag to contact at least one moving surface which is moving at a rate in the range of 125 feet/second to 250 feet/second, propelling the slag contacting the at least one moving surface into the air to form fibrous pieces, and cooling the fibrous pieces to form fibers. In a preferred embodiment, the moving surface is the outer radius of a spinning wheel which rotates such that the speed at the wheel's outer radius is 125 feet/second to 250 feet/second. Also included in the present invention is a mineral wool fiber manufactured by the method described above. The method of the invention provides a preferred fiber where the rock comprises $SiO_2$, $Al_2O_3$, $CaO$, and $MgO$ in relative amounts satisfying the ratio:

$$\frac{(wt\%\ SiO_2)(wt\%\ Al_2O_3)}{(wt\%\ CaO)(wt\%\ MgO)}$$

such that the ratio is in the range of about 1.2:1 to about 1.4:1.

Fig. 1

**Description**

FIELD OF THE INVENTION

This invention relates generally to fiberized mineral wool, and more specifically to an improved method of fiberizing molten mineral material.

BACKGROUND OF THE INVENTION

Thermoplastic mineral materials are used at the starting point for the production of many noise-insulating and thermal-insulating panels. The thermoplastic materials are used to produce mineral wool fibers. These mineral wool fibers are then used to produce paper which is used in the appropriate panel construction.

A typical method used to form mineral wool fibers from thermoplastic mineral materials, such as glass, is to discharge the molten mineral material from a cupola onto a moving surface, such as a spinning wheel, which propels the molten material into the air in pieces. Upon cooling in the air, the material hardens and the fibers are then available for use in the production of paper.

The method described above is commonly known as an external centrifugation technique. In such a technique, molten slag is poured down onto one or more spinning wheels which propel the slag into the air in fibrous pieces. The fibrous pieces of molten slag are then cooled in the air and form fibers. Traditionally, the wheels have spun at relatively high speeds. This method has been used with many materials, including basaltic glasses. Often, the spinning wheel is cooled by water circulating through the interior of the wheel. Wheel materials have been used, however, which remove the need for such water cooling. Such a wheel may be made of a refractory material.

Once the fibers are produced, they can be used for the production of papers which are in turn used in the production of insulating panels. In the field of acoustic insulation, the noise reduction coefficient (NRC) is a characteristic which describes the ability of a particular material to dampen noise. The properties of the paper used to make the panels is a large factor in the panel's NRC. Conventional pulp and paper technology relied heavily on the use of low density slurries to increase NRC.

Traditionally, panels having a low density of fibers have proven successful for noise reduction capabilities. In other words, where the panel had a relatively high void volume, sound dampening abilities were quite good. Problems existed, however, in manufacturing panels with this low density paper. There were, and still are, problems associated with manufacturing low density paper. One such problem involves the fact that during the slurry mixing, the fibers bend and break under stresses applied by other fibers and the fourdrinier.

When fibers break, they stack more easily against each other. This breaking of fibers leads to decreases in void volume within the fiber matrix, which in turn leads to a higher density paper and a lower (less desirable) NRC.

SUMMARY OF THE INVENTION

The present invention relates to a method for fiberizing molten mineral material. The method comprises the steps of melting rock to form a molten slag, causing the slag to contact at least one moving surface which is moving at a rate in the range of from about 125 feet/second to about 250 feet/second, propelling the slag into the air in fibrous pieces as it contacts the moving surface, and cooling the fibrous pieces to form fibers. In a preferred embodiment, the moving surface is the outer radius of a spinning wheel which rotates such that the speed at the wheel's outer radius is from about 125 feet/second to about 250 feet/second. Also included in the present invention is a mineral wool fiber manufactured by the method described above. The best rock used to form the melt is comprised of $SiO_2$, $TiO_2$, $Al_2O_3$, $Fe_2O_3$, MnO, MgO, CaO, $Na_2O$, $K_2O$, and $P_2O_5$. The method of the invention provides a preferred fiber where the rock comprises $SiO_2$, $Al_2O_3$, CaO, and MgO in relative amounts satisfying the ratio:

$$\frac{(wt\% \ SiO_2)(wt\% \ Al_2O_3)}{(wt\% \ CaO)(wt\% \ MgO)}$$

such that the ratio is in the range of about 1.2:1 to about 1.4:1. More preferably, the ratio should be in the range of about 1.3:1 to about 1.4:1.

It is to be understood that both the foregoing general description and the following detailed description are exemplary, but are not restrictive, of the present invention.

BRIEF DESCRIPTION OF THE DRAWING

The invention is best understood from the following detailed description when read in conjunction with the accompanying drawing. It is emphasized that, according to common practice, the various features of the drawing are not to scale. On the contrary, the dimensions of the various features are arbitrarily expanded or reduced for clarity. Included in the drawing are the following figures:

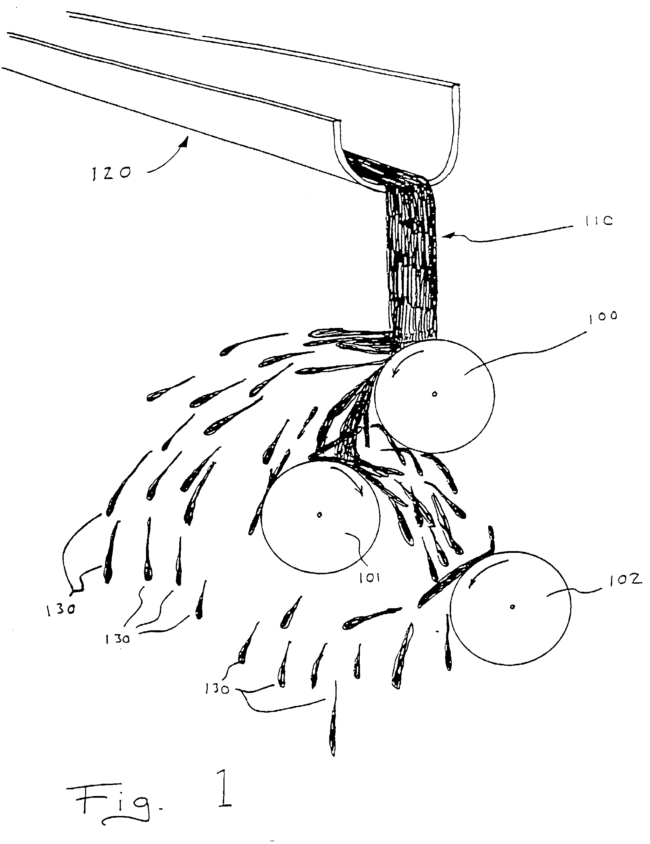

FIG. 1 is a schematic illustration of the process used in the present invention.

DETAILED DESCRIPTION OF THE INVENTION

The present invention provides a method for fiberizing molten mineral material where thermoplastic material is melted, poured onto a moving surface which propels the material into the air in fiberous pieces, and allowed to cool. In an exemplary embodiment, more than one moving surface may be used, as shown schematically in **FIG. 1**. In addition, the moving surface is typically a spinning wheel. In an alternative embodiment, a single moving surface, such as a single spinning wheel, can be used. These fibers produced in accordance with the present invention have superior characteristics for the production of paper and panels having excellent noise reduction capabilities (i.e. a high NRC).

**FIG. 1** is a schematic illustration of the process which is used in the present invention. Traditionally, this process is referred to as an external centrifugation technique. As shown in **FIG. 1,** there are several moving surfaces, namely spinning wheels **100**, **101**, and **102**, respectively. Molten slag **110** is carried from a cupola (not shown) or furnace (not shown) where the rock is melted, and caused to contact spinning wheels **100**, **101**, and **102**, by trough **120**. Fibers **130** are propelled from each surface, cooled in the air, and collected through an air uplift system. Several methods exist to melt the rock, and one skilled in the art would understand that many of them would work well with the present invention.

The inventor has determined, experimentally, that a moving surface should be moving at a rate between about 125 feet/second and 250 feet/second. In the case where the moving surface is a spinning wheel, as illustrated with respect to spinning wheels **100, 101,** and **102** in **FIG. 1**, the wheel is spinning at a rate of 125 to 250 feet/second at its outer radius. In an alternative embodiment, the moving surface such as spinning wheels **100**, **101**, and **102** are moving at 150 to 225 feet/second. For purposes of clarity, the following example is provided to illustrate precisely what is meant by "a speed of 150 feet/second at its outer radius." A wheel which has a radius of 1 foot has a circumference of 6.28 feet. Thus, the wheel must spin completely around about 23.9 times per second (150/6.28) to obtain a speed of 150 feet/second at its outer radius. Thus, a wheel having a 1 foot radius must rotate at a speed of 23.9 revolutions/second in order to achieve a speed of 150 feet/second at its outer radius.

The moving surface provides for the expulsion of the molten rock, also called molten slag, into the air, in fibrous pieces. Molten rock is propelled from the moving surface after hitting the moving surface and not adhering or remaining on the moving structure. After being propelled, the fibrous pieces cool in the air. By slowing down the spinning wheels from a conventional, faster, speed, to the speeds disclosed in accordance with the present invention the residence time of the molten slag on the moving surface is increased. This increase in residence time on the moving surface produces a fiber which is generally thicker and shorter than conventional fibers which are longer and thinner. It is preferred that the desired fiber have a diameter in the range of from about 4.5 to about 6.0 µm. It is more preferred, for purposes of acoustic panels, that the fibers have a diameter in the range of 5.5 to 6.0 µm.

Cooling rate can also play an important role in the development of the fibers. Generally, the faster the fibers are cooled as they are spun off a moving surface, such as spinning wheels **100**, **101**, and **102**, the better their physical structure for purposes of achieving the purposes of this invention. This observation is based on an examination of the resultant lattice structure of the fiber material produced in accordance with the present invention. By cooling the fiber quickly, the mineral lattice structure does not have time to organize into a regular pattern. This irregular matrix reduces the brittleness of the fiber. In other words, where the fiber is allowed to cool slowly, the mineral structure has time to arrange itself in a lower energy, regular lattice structure. This resultant structure results in a fiber which is more brittle than one which is cooled quickly and thus has an irregular lattice structure.

The fact that a thicker, shorter, less brittle fiber is produced according to the present invention, as discussed above, is important because such a fiber is better suited to produce a paper which has improved NRC characteristics. Because the fibers in accordance with the present invention are relatively thicker, shorter, and more durable (as compared to fibers manufactured according to conventional methods using faster spin speeds), they do not stick or intermingle very well when mixed during paper production. This is due largely to the fact that they are less brittle and do not bend or break. The thicker, shorter, less brittle fiber thus creates an entanglement of fibers with relatively large voids (or interstitial spaces) between fibers. This configuration provides faster drainage time and is more resistant to damage from shear stresses encountered during paper pulp production.

Because of the above-described characteristics of the fibrous entanglement, the fiber volume can be increased during paper production. This increase in fiber volume leads to an overall increase of bulk material on the fourdrinier. To compensate, the amount of slurry sent to the fourdrnier is reduced in the process of the present invention. This reduction in slurry results in a paper having substantially the same overall thickness as traditional papers, but causes the mat to have increased porosity from traditional paper. The increased porosity leads to a higher NRC for the paper produced.

An additional aspect of the present invention concerns the selection of rock to be melted to form the molten slag. By using rock having certain characteristics, a particularly good fiber is produced. Generally, a typical rock will contain $SiO_2$, $TiO_2$, $Al_2O_3$, $Fe_2O_3$, MnO, MgO, CaO, $Na_2O$, $K_2O$, and $P_2O_5$. The following table shows the relative compositions of three different fibers formed in accordance with the present invention, each from a different rock material. The relative compositions are in weight percent, and the name of a supplier of each rock is indicated.

TABLE 1

| Supplier: | US MINERAL | SLOSS | MFS |
|---|---|---|---|
| $SiO_2$ | 42.31 | 39.77 | 45.57 |
| $TiO_2$ | 00.52 | 00.57 | 00.85 |
| $Al_2O_3$ | 11.35 | 12.86 | 09.24 |
| $Fe_2O_3$ | 00.69 | 00.59 | 00.73 |
| MnO | 00.40 | 00.30 | 00.65 |
| MgO | 10.32 | 10.46 | 11.63 |
| CaO | 33.16 | 34.36 | 30.44 |
| $Na_2O$ | 00.31 | 00.48 | 00.30 |
| $K_2O$ | 00.90 | 00.58 | 00.56 |
| $P_2O_5$ | 00.02 | 00.04 | 00.02 |

US Mineral, of Huntington, Illinois, Sloss, of Birmingham, Alabama, and MFS, of Bethlehem, Pennsylvania, are all commercial suppliers of rock. One skilled in the art understands that these rocks are common and that the relative compositions shown in the above table may vary slightly from lot to lot and from supplier to supplier. It is not necessary to the present invention that the rock be purchased from the named commercial suppliers.

An important aspect of this invention concerns the A:B ratio of the rocks used. The A:B ratio is defined as:

$$\frac{A}{B} = \frac{(wt\%\ SiO_2)(wt\%\ Al_2O_3)}{(wt\%\ CaO)(wt\%\ MgO)}.$$

The preferred A:B ratio is within the range of about 1.2:1 to 1.4:1. An even more preferred range is about 1.3:1 to about 1.4:1. It has been found experimentally that an A:B ratio in this range provides the preferred fibers.

Although illustrated and described herein with reference to certain specific embodiments, the present invention is nevertheless not intended to be limited to the details shown. Rather, various modifications may be made in the details within this scope and range of equivalents of the claims and without departing from the spirit of the invention.

**Claims**

1. A method for producing mineral wool fibers, said method comprising the steps of:

   melting rock to form a molten slag;
   causing said slag to contact at least one moving surface, said at least one moving surface moving at a rate in the range of 125 feet/second to 250 feet/second;
   propelling said slag contacting said at least one moving surface into the air in fibrous pieces; and
   cooling said fibrous pieces to form fibers.

2. The method of claim 1, wherein said at least one moving surface is at least one spinning wheel, having an outer radius, rotating at a rate in the range of 125 feet/second to 250 feet/second at said outer radius.

3. The method of claim 1, wherein said at least one moving surface is at least one spinning wheel, having an outer radius, rotating at a rate in the range of 150 feet/second to 225 feet/second at said outer radius.

4. The method of claim 1, wherein said rock comprises $SiO_2$, $TiO_2$, $Al_2O_3$, $Fe_2O_3$, MnO, MgO, CaO, $Na_2O$, $K_2O$, and $P_2O_5$.

5. The method of claim 1, wherein said rock comprises $SiO_2$, $Al_2O_3$, CaO, and MgO in relative amounts satisfying the ratio:

$$\frac{(wt\%\ SiO_2)(wt\%\ Al_2O_3)}{(wt\%\ CaO)(wt\%\ MgO)}$$

such that said ratio is in the range of about 1.2:1 to about 1.4:1.

6. The method of claim 1, wherein said rock comprises $SiO_2$, $Al_2O_3$, CaO, and MgO in relative amounts satisfying the ratio:

$$\frac{(wt\%\ SiO_2)(wt\%\ Al_2O_3)}{(wt\%\ CaO)(wt\%\ MgO)}$$

such that said ratio is in the range of about 1.3:1 to about 1.4:1.

7. A mineral wool fiber manufactured by the method comprising the steps of:

about 1.4:1.

melting rock to form a molten slag;
causing said slag to contact at least one moving surface, said at least one moving surface moving at a rate m the range of 125 feet/second to 250 feet/second;
propelling said slag contacting said at least one moving surface into the air in fibrous pieces; and
cooling said fibrous pieces to form fibers.

8. The mineral wool fiber of claim 7, wherein said at least one moving surface is at least one spinning wheel, having an outer radius, rotating at a rate in the range of 125 feet/second to 250 feet/second at said outer radius.

9. The mineral wool fiber of claim 7, wherein said at least one moving surface is at least one spinning wheel, having an outer radius, rotating at a rate in the range of 150 feet/second to 225 feet/second at said outer radius.

10. The mineral wool fiber of claim 7, wherein said fiber has a diameter in the range of 4.5 $\mu$m to 6.0 $\mu$m.

11. The mineral wool fiber of claim 7, wherein said fiber has a diameter in the range of 5.5 $\mu$m to 6.0 $\mu$m.

12. The mineral wool fiber of claim 7, wherein said rock comprises $SiO_2$, $TiO_2$, $Al_2O_3$, $Fe_2O_3$, MnO, MgO, CaO, $Na_2O$, $K_2O$, and $P_2O_5$.

13. The mineral wool fiber of claim 7, wherein said rock comprises $SiO_2$, $Al_2O_3$, CaO, and MgO in relative amounts satisfying the ratio:

$$\frac{(wt\% \ SiO_2)(wt\% \ Al_2O_3)}{(wt\% \ CaO)(wt\% \ MgO)}$$

such that said ratio is in the range of about 1.2:1 to about 1.4:1.

14. The mineral wool fiber of claim 7, wherein said rock comprises $SiO_2$, $Al_2O_3$, CaO, and MgO in relative amounts satisfying the ratio:

$$\frac{(wt\% \ SiO_2)(wt\% \ Al_2O_3)}{(wt\% \ CaO)(wt\% \ MgO)}$$

such that said ratio is in the range of about 1.3:1 to

Fig. 1